# FASCICULE DE BREVET EUROPEEN

(11) **EP 2 221 630 B1**
(45) Date de publication et mention de la délivrance du brevet: **03.06.2015**
(21) Numéro de dépôt: 10290046.1
(22) Date de dépôt: 02.02.2010
(51) Int. Cl.: G01S 5/00, G01S 5/02, G01S 19/49, G01S 19/51

(54) **Dispositif de sécurité consistant à mesurer la distance entre deux plateformes mobiles par technique inertielle et radio électrique**
Sicherheitsvorrichtung welche den Abstand zwischen zwei mobilen Geräten unter Verwendung von Beschleunigungssensortechnik und Radiowellen bestimmt.
Safety device measuring the distance between two mobile platforms using inertial sensor technology and radio waves.

(30) Priorité: 10.02.2009 FR 0900580
(43) Date de publication de la demande: 25.08.2010
(73) Titulaire: Sofresud, 83500 La Seyne sur Mer (FR)
(72) Inventeur: Alhadef, Bernard, 83330 Le Castellet (FR)
(74) Mandataire: Novagraaf Technologies

(56) Documents cités:
- EP-A1- 0 706 063
- WO-A2-97/14048
- GB-A- 2 380 793
- US-A- 5 326 052
- US-A- 5 757 317

## Description

La présente invention concerne le domaine des dispositifs de sécurité pour le transbordement de fluide à l'aide de flexible ou de manche de ravitaillement entre deux plateformes mobiles l'une par rapport à l'autre. Elle a plus particulièrement pour objet un dispositif apte à déterminer l'écartement entre les deux plateformes dans un repère prédéfini à l'aide de deux moyens de positionnement indépendants et autonomes et d'un moyen de traitement de signaux issus de ces moyens de positionnement. Ces moyens de traitement étant aptes à déterminer des éléments de positionnement et à les transmettre à des moyens extérieurs.

L'un des buts de l'invention est de proposer un dispositif autonome apte à déterminer précisément et rapidement l'écartement entre les deux plateformes quel que soit le type de l'environnement et quelle que soit la distance entre les deux plateformes dans le but de détecter de manière automatique les risques de rupture des flexibles utilisés pour le transbordement du fluide et d'engager les actions de sécurité.

On connaît les systèmes de positionnement satellitaire de type GPS qui permettent d'obtenir la position d'une plateforme mobile avec une précision inférieure au mètre voire au centimètre. Mais le système est incompatible avec l'autonomie du dispositif et le temps de réaction très rapide car le système GPS a besoin pour fonctionner d'une référence extérieure (pas toujours disponible) et d'une grande population de mesure et donc un grand temps d'intégration. De plus le système n'est pas totalement autonome (susceptible d'être brouillé ou sensible aux interférences) et il existe des zones d'ombres pour l'obtention de la garantie de fonctionnement. Par exemple, le document WO 97/14048 décrit un dispositif GPS situé sur une première plateforme transmet à un second dispositif GPS situé sur une seconde plateforme sa position. Le second GPS comprend des moyens de télémétrie pour calculer la distance relative entre les deux plateformes en se basant sur la télémétrie reçue du premier GPS et sa propre position GPS. De même, le document US 5 757 317 décrit une méthode de calcul de distance relative entre deux véhicules en se basant au moins sur des mesures GPS.

On connaît les systèmes par télémétrie laser dont le principe est basé sur le calcul du temps de propagation aller et retour de la lumière entre les deux plateformes. Le document EP 0 706 063 décrit un tel système. Mais la mesure laser étant ponctuelle le système pour fonctionner par tout temps et avec des variations d'altitude des deux plateformes nécessite soit de multiplier le nombre de capteurs soit d'effectuer un balayage de la source laser. De plus les moyens de positionnement disposés sur chacune des plateformes ne sont pas indépendants car ils nécessitent d'instrumenter une plateforme maître et une plateforme esclave. Enfin, le système global est très onéreux, délicat de mise en oeuvre et en conséquence mal adapté à un environnement industriel difficile.

On connaît les systèmes radar à balayage dont le principe est basé sur la mesure de temps de vol par l'émission d'une onde électromagnétique dans le spectre hyperfréquence. Bien que la précision soit bien plus faible qu'avec un système laser, elle reste compatible avec des mesures de positionnement de plateforme. Mais il existe une zone aveugle à proximité de la plateforme émettrice. On connaît les systèmes d'imagerie composés de plusieurs caméras dont on maîtrise le positionnement et de la mise en oeuvre de logiciels de traitement des images. Néanmoins, ce type de système est complexe de mise en oeuvre avec un degré de fiabilité insuffisant et nécessite également des caméras infra rouge afin de fonctionner par tout type de temps et à n'importe quel moment de la journée.

On connaît également les systèmes manuels mesurant l'écartement de deux plateformes par surveillance de la distance entre les plateformes à l'aide d'une « ligne de distance » constituée par une corde tendue munie à intervalles réguliers de marques tels des fanions mais dont l'utilisation entièrement manuelle reste soumise aux erreurs humaines et à la présence permanente d'opérateurs.

Pour compenser les erreurs des dispositifs GPS, le document GB 2 380 793 décrit l'utilisation en complément de mesures de distance relative utilisant des ondes radios émis par des émetteurs-récepteurs situés sur chaque plateforme.

La solution proposée est un dispositif automatique, de grande fiabilité, capable de fonctionner par tout temps et qui ne dépend pas d'informations externes au dispositif.

Un mode de réalisation de l'invention est le suivant : un premier dispositif de positionnement composé d'une centrale inertielle est installée sur une plateforme et est capable d'en donner la position exacte, un second dispositif de positionnement composé d'une autre centrale inertielle est installée sur la seconde plateforme et est capable de donner la position exacte de cette seconde plateforme, des moyens de traitement sont aptes à traiter les signaux issus desdits dispositifs de positionnement, des moyens de communication relient les dispositifs de positionnement aux moyens de traitement, des moyens extérieurs sont capables d'utiliser les informations du dispositif de l'invention, des moyens de communications relient ces différents moyens, l'invention est caractérisée en ce que l'écartement entre les deux plateformes est déterminé par les moyens de traitement à partir des données des dispositifs de positionnement par différentiation des positions transmises par les deux moyens de positionnement.

Avantageusement, les moyens de traitement comportent un calculateur sous système d'exploitation habituellement utilisé dans le commerce, ce système d'exploitation peut être par exemple le système d'exploitation Windows, des moyens de calcul et de gestion de l'information mettant en oeuvre un logiciel réalisant plusieurs fonctions. Le logiciel mis en oeuvre par les moyens de traitement, développé sous langage de programmation C ou sous langage de programmation graphique LabVIEW, par exemple, a pour mission de traiter les données des dispositifs de positionnement disposés sur les deux plateformes et de calculer à partir de ces données de position l'écartement entre les deux plateformes. L'écartement des deux plateformes est alors transmis par les moyens de communications aux moyens extérieurs. Grâce à ces moyens extérieurs, il sera alors possible de couper l'alimentation et d'interrompre le transbordement ou le ravitaillement en cours et dans les cas extrêmes il sera possible d'actionner un système de largage automatique du flexible.

Avantageusement, un récepteur GPS est disposé sur chacune des plateformes pour concourir à la correction de la dérive des capteurs inertiels pour augmenter la durée d'emploi du dispositif.

Avantageusement, les récepteurs GPS sont utilisés en mode différentiel l'un par rapport à l'autre pour concourir à la correction de la dérive des capteurs inertiels pour augmenter la durée d'emploi du dispositif et la précision du dispositif.

Selon une caractéristique avantageuse, l'une au moins des deux plateformes peut être fixe.

Selon une autre caractéristique, le moyen de traitement calcule l'écartement entre plusieurs points des deux plateformes mobiles par transfert d'axe sur support rigide à partir des relevés des deux dispositifs de positionnement ayant comme repère celui des deux plateformes.

Selon une autre caractéristique l'amélioration de la compensation des dérives inhérentes aux techniques inertielles dans la durée d'emploi du dispositif peut être obtenue à l'aide de récepteurs GPS dont chacun est couplé à chacune des centrales inertielles.

Selon une autre caractéristique les récepteurs GPS de même type et synchronisés sur les mêmes satellites sont couplés pour permettre un fonctionnement en différentiel des uns par rapport aux autres pour améliorer la compensation des dérives inhérentes aux techniques inertielles.

Selon une autre caractéristique l'amélioration de la compensation des dérives inhérentes aux techniques inertielles dans la durée d'emploi du dispositif peut être obtenue à l'aide de télémètres laser couplés à chacune des centrales inertielles.

Selon une caractéristique avantageuse, le nombre de plateformes peut-être étendu au dessus de deux, en rajoutant un dispositif de positionnement sur les plateformes supplémentaires.

La présente invention concerne un dispositif apte à déterminer l'écartement entre deux plateformes mobiles. Ce dispositif est particulièrement apte à être utilisé dans le cadre de ravitaillement en mer de deux plateformes mobiles constituées de deux navires.

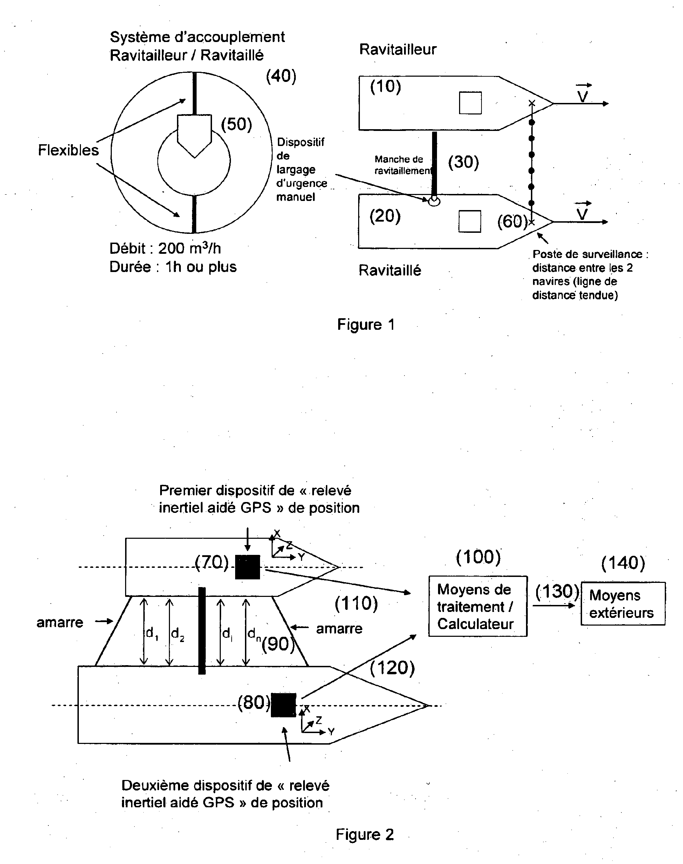

La figure 1 présente le principe de ravitaillement de deux navires à la mer :
Etape 1 : le navire ravitaillé (20) se positionne parallèlement au navire ravitailleur (10).
Etape 2 : un manche de ravitaillement (30) est déployé entre les deux navires. Le système d'accouplement (40) est équipé d'un dispositif de largage d'urgence (50) capable de désaccoupler le manche de ravitaillement au navire ravitaillé en cas d'urgence.
Etape 3 : le ravitaillement peut débuter

Au cours du ravitaillement, un opérateur (60) surveille la distance entre les deux navires (ligne de distance tendue). Si l'opérateur constate une variation de distance dangereuse entre les deux navires le dispositif de largage d'urgence (50) est actionné de manière à désaccoupler le manche de ravitaillement.

La présente invention a pour objet d'être utilisée dans le cadre de ravitaillement à bord comme présenté sur la figure 2. La position des deux plateformes est mesurée par les dispositifs de relevé inertiel (aidé GPS) de position (70) et (80). L'écartement, d1, d2, ..., dn (90) entre plusieurs points des deux plateformes est calculé par le calculateur des moyens de traitement (100) à partir des mesures de positionnement des deux plateformes relié aux dispositifs de positionnement par les moyens de communication (110) et (120).

La présente invention est avantageusement utile dans le cadre de la sécurité de transbordement de fluide, comme du gaz ou du carburant par exemple, utilisant un manche de ravitaillement ou un flexible par lequel transite le fluide entre deux plateformes mobiles, comme des navires ou des barges flottantes par exemple. La présente invention permet de détecter de manière automatique les risques de rupture des flexibles de ravitaillement et d'engager les procédures de sécurité en présence de ces risques.

L'écartement des deux plateformes mesuré et calculé grâce à l'invention est transmis par les moyens de communication (130) aux moyens extérieurs (140) pour vérifier que l'écartement est compatible avec la sécurité du ravitaillement ou du transbordement de fluide.

## Revendications

1. Dispositif de sécurité pour déterminer de façon automatique l'écartement (90) entre deux plateformes mobiles (10, 20) dans un repère prédéfini, ledit dispositif comprenant un moyen de traitement (100) des informations de position de la première plateforme mobile (10) données par une première centrale inertielle et un premier récepteur GPS et des informations de position de la seconde plateforme mobile (20) données par une seconde centrale inertielle et un second récepteur GPS pour calculer l'écartement entre les deux plateformes, chacun des récepteurs GPS étant couplé à chacune des centrales inertielles, **caractérisé en ce que** les deux récepteurs GPS sont synchronisés sur les mêmes satellites et sont couplés entre eux.

2. Dispositif selon la revendication 1, **caractérisé en ce qu'**il comprend au moins un télémètre laser pour concourir à la correction des erreurs de mesure.

3. Dispositif selon la revendication 2, **caractérisé en ce qu'**il comprend deux télémètres laser couplés chacun à une centrale inertielle.

4. Dispositif selon l'une des revendications précédentes, **caractérisé en ce qu'**il comprend un système d'imagerie pour concourir à la correction des erreurs de mesure.

5. Dispositif selon l'une des revendications précédentes, **caractérisé en ce qu'**il comprend, en outre, une ligne de distance entre lesdites plateformes (10, 20).

6. Dispositif selon l'une quelconque des revendications précédentes, **caractérisé en ce que** le moyen de traitement (100) calcule l'écartement (90) entre plusieurs points des deux plateformes mobiles (10, 20) par transfert d'axe sur support rigide à partir des relevés des deux centrales inertielles et des deux récepteurs GPS en ayant comme repère celui des deux plateformes.

7. Dispositif selon l'une des revendications précédentes, **caractérisé en ce qu'**il comprend des moyens de communication (130) de l'écartement (90) des deux plateformes destinés à vérifier que ledit écartement est compatible avec la sécurité.

8. Utilisation du dispositif selon l'une quelconque des revendications précédentes pour la sécurité des opérations de transbordement ou de ravitaillement entre au moins deux plateformes (10, 20).

9. Utilisation du dispositif selon la revendication 8, **caractérisée en ce que** l'une des deux plateformes (10, 20) est fixe.

## Patentansprüche

1. Sicherheitsvorrichtung zur automatischen Bestimmung des Abstandes (90) zwischen zwei mobilen Geräten (10, 20) in einem vordefinierten Bezugsraum, wobei die Vorrichtung ein Mittel zur Verarbeitung (100) der Positionsinformationen des ersten mobilen Geräts (10), die von einer ersten Trägheitszentrale und einem ersten GPS-Empfänger stammen, und der Positionsinformationen des zweiten mobilen Geräts (20), die von einer zweiten Trägheitszentrale und einem zweiten GPS-Empfänger stammen, um den Abstand zwischen den beiden Geräten zu berechnen, wobei jeder der GPS-Empfänger mit jeder der Trägheitszentralen gekoppelt ist, **dadurch gekennzeichnet, dass** die beiden GPS-Empfänger auf denselben Satelliten synchronisiert und miteinander gekoppelt sind.

2. Vorrichtung nach Anspruch 1, **dadurch gekennzeichnet, dass** sie mindestens ein Lasertelemeter umfasst, um zur Korrektur der Messfehler beizutragen.

3. Vorrichtung nach Anspruch 2, **dadurch gekennzeichnet, dass** sie zwei Lasertelemeter umfasst, die jeweils mit einer Trägheitszentrale gekoppelt sind.

4. Vorrichtung nach einem der vorhergehenden Ansprüche, **dadurch gekennzeichnet, dass** sie ein Bildgebungssystem umfasst, um zur Korrektor der Messfehler beizutragen.

5. Vorrichtung nach einem der vorhergehenden Ansprüche, **dadurch gekennzeichnet, dass** sie ferner eine Distanzlinie zwischen den Geräten (10, 20) umfasst.

6. Vorrichtung nach einem der vorhergehenden Ansprüche, **dadurch gekennzeichnet, dass** das Verarbeitungsmittel (100) den Abstand (90) zwischen mehreren Punkten der beiden mobilen Geräte (10, 20) durch Achstransfer auf einem starren Träger aus den Erhebungen der beiden Trägheitszentralen und der beiden GPS-Empfänger berechnet, wobei als Bezugspunkt jener der beiden Geräte herangezogen wird.

7. Vorrichtung nach einem der vorhergehenden Ansprüche, **dadurch gekennzeichnet, dass** sie Mittel zur Kommunikation (130) des Abstandes (90) der beiden Geräte umfasst, die dazu bestimmt sind zu überprüfen, ob der Abstand mit der Sicherheit vereinbar ist.

8. Verwendung der Vorrichtung nach einem der vorhergehenden Ansprüche für die Sicherheit der Umladungs- oder Nachladevorgänge zwischen mindestens zwei Geräten (10, 20).

9. Verwendung der Vorrichtung nach Anspruch 8, **dadurch gekennzeichnet, dass** eines der beiden Geräte (10, 20) fest ist.

## Claims

1. Safety device for automatically determining the gap (90) between two moving platforms (10, 20) in a predefined reference frame, said device comprising a processing means (100) for the position information from the first moving platform (10), which information is provided by a first inertial unit and a first GPS receiver, and for the position information from the second moving platform (20), which information is provided by a second inertial unit and a second GPS receiver, in order to compute the gap between the two platforms, each of the GPS receivers being coupled to each of the inertial units, **characterized in that** the two GPS receivers are synchronized to the same satellites and are coupled to one another.

2. Device according to Claim 1, **characterized in that** it comprises at least one laser telemeter for contributing to correcting measurement errors.

3. Device according to Claim 2, **characterized in that** it comprises two laser telemeters that are each coupled to an inertial unit.

4. Device according to one of the preceding claims, **characterized in that** it comprises an imaging system for contributing to correcting measurement errors.

5. Device according to one of the preceding claims, **characterized in that** it comprises, moreover, a distance line between said platforms (10, 20).

6. Device according to any one of the preceding claims, **characterized in that** the processing means (100) computes the gap (90) between a plurality of points on the two moving platforms (10, 20) by means of axis transfer to a rigid support on the basis of the reports from the two inertial units and from the two GPS receivers, taking the reference frame of the two platforms as the reference frame.

7. Device according to one of the preceding claims, **characterized in that** it comprises communication means (130) for the gap (90) between the two platforms, which communication means are intended to check that said gap is compatible with safety.

8. Use of a device according to any one of the preceding claims for safety for the operations of transfer or refuelling between at least two platforms (10, 20).

9. Use of the device according to Claim 8, **characterized in that** one of the two platforms (10, 20) is fixed.
